# EUROPEAN PATENT SPECIFICATION

(11) **EP 3 960 699 B1**
(45) Date of publication and mention of the grant of the patent: **11.02.2026**
(21) Application number: 20794807.6
(22) Date of filing: 26.03.2020
(51) Int. Cl.: C23C 18/42, G01N 21/552, G01N 21/65, G02B 5/00, G02B 5/30, B82Y 30/00

(54) **NANOSTRUCTURE SUBSTRATE**
NANOSTRUKTURSUBSTRAT
SUBSTRAT NANOSTRUCTURÉ

(30) Priority: 26.04.2019 JP 2019085319
(43) Date of publication of application: 02.03.2022
(73) Proprietor: EEJA Ltd., Tokyo 100-0025 (JP)
(72) Inventor: ITO, Masahiro, Hiratsuka-City, Kanagawa 254-0076 (JP); YAMANAKA, Shigeki, Hiratsuka-City, Kanagawa 254-0076 (JP)
(74) Representative: Dummett Copp LLP
(86) International application number: PCT/JP2020/013701
(87) International publication number: WO 2020/217842

(56) References cited:
- CN-A- 108 844 943
- JP-A- 2013 010 884
- JP-A- 2013 010 884
- JP-A- 2018 048 382
- KR-A- 20130 049 767

## Description

### Technical Field

The present invention relates to a nanostructure substrate using cohesive polarization action and/or electromagnetic polarization action of deposited metal, for example, a nanostructure substrate that can be applied to various devices using localized surface plasmon resonance (hereinafter, generically referred to as "plasmon").

### Background Art

When a metal particle is made to be fine so as to have a size of several tens nm, that is, a size of less than 100 nm, functions that were not shown in bulk metal have been expressed. For example, a group of fine particles of metal reduced from an aqueous solution has a strong cohesive force even in an aqueous solution. Therefore, it is known that cohesive polarization action works among fine particles, and metal fine particles stick to each other. Furthermore, a plasmon of a group of gold fine particles is known to generate a strong absorption band in the visible light region. This plasmon is defined as a resonant oscillation of free electrons in nanoparticles, guided by incident light.

In general, when an absorption spectrum of a group of metal fine particles, such as a nanorod, having a high aspect ratio is measured, a plasmon by the longitudinal oscillation and a plasmon by the transverse oscillation are observed. Furthermore, when two, three, or five nanoparticles are placed in a distance of several nanometers in a state of being irradiated with an electromagnetic wave, a high-temperature region called a hot spot (hot space) is generated by interaction among nanoparticles. Such a phenomenon is changed by the size or shape of a metal fine particle, a configuration of a metal fine particle group, a medium with which metal fine particles are brought into contact, and the like. In this way, the nanostructure substrate has various phenomena which have not been observed in bulk metal.

Conventionally, a plasmon by a nanostructure substrate has been applied to electronics, decoration, medical application, and the like, and is expected to be applied to a wide variety of devices such as organic electroluminescence elements, inorganic electroluminescence elements, inorganic LED elements, photoelectric conversion elements (solar battery elements), biosensors, luminescent laser, and color filters for LCD. When a metal fine particle group is used for devices, from the viewpoint of handling property of materials, stability, diversity of applied fields, and the like, the metal fine particle group is commonly immobilized to a support body. Also conventionally, aggregates or nanostructure substrates of a group of gold fine particles wet-reduced, modified, and immobilized by various methods have been proposed.

For example, claim 1 of Japanese Unexamined Patent Application, Publication No. 2004-051997 (below-mentioned Patent Document 1) discloses "a metal fine particle dispersion liquid containing a metal colloidal fine particle having a predetermined average particle diameter, the metal colloidal fine particle including a metal colloidal ultrafine particle as a core having a particle diameter of 10 nm or less dispersed in a dispersion medium, and metal deposited on the surface of the core by a reduction method."

Claim 3 of this publication discloses the invention of "the metal fine particle dispersion liquid according to claim 1, wherein the dispersion liquid includes a dispersing agent, and the dispersing agent is at least one selected from alkylamine, carboxylic acid amide, and aminocarboxylate", and the paragraphs 0016 to 0018 of the publication describe specific examples or the content of alkylamine and the like.

For example, claim 1 of Japanese Unexamined Patent Application, Publication No. 2013-10884 (below-mentioned Patent Document 2) discloses the invention of "a metal fine particle composite comprising a matrix resin and a plurality of metal fine particles fixed to the matrix resin, at least a part of the metal fine particles including a portion embedded in the matrix resin and a portion exposed to the outside from a surface of the matrix resin, and further including a metal film covering the exposed site." Claim 7 of the publication discloses the invention of "a method for producing a metal fine particle composite, the method comprising the following steps A to C: (A) a step of preparing an untreated metal fine particle composite including a matrix resin and a plurality of metal fine particles fixed to the matrix resin, at least a part of the metal fine particles including a portion embedded in the matrix resin and an exposed portion exposed to the outside from a surface of the matrix resin; (B) a step of forming a plated coating film that covers an exposed portion in the exposed portion of the metal fine particle; and (C) a step of heat-treating the plated coating film to be changed into a shape of metal film having a smaller diameter of the plated coating film to obtain a metal fine particle composite.

The invention disclosed in claim 1 of Japanese Unexamined Patent Application, Publication No. 2013-10884 (below-mentioned Patent Document 2) is used for applications such as a sensor by metal fine particle composite dispersed only on the surface of the matrix resin (paragraphs 0012 to 0014 of the publication). However, when irradiation with electromagnetic wave is carried out from the back surface side, a metal fine particle group embedded in the matrix resin is also affected. Therefore, in this invention, irradiation with electromagnetic wave is carried out from a front surface side of the matrix resin.

Furthermore, claim 1 of Japanese Unexamined Patent Application, Publication No. 2013-177665 (below-mentioned Patent Document 3) discloses "a metal particle aggregate including at least 30 or more metal particles disposed two-dimensionally at intervals, wherein the metal particles having an average particle diameter in a range of 200 nm to 1600 nm, an average height in the range of 55 nm to 500 nm, and an aspect ratio defined as a ratio of the average particle diameter to the average height in the range of 1 to 8, and the metal particles are disposed such that an average distance to adjacent metal particles is in the range of 1 nm to 150 nm."

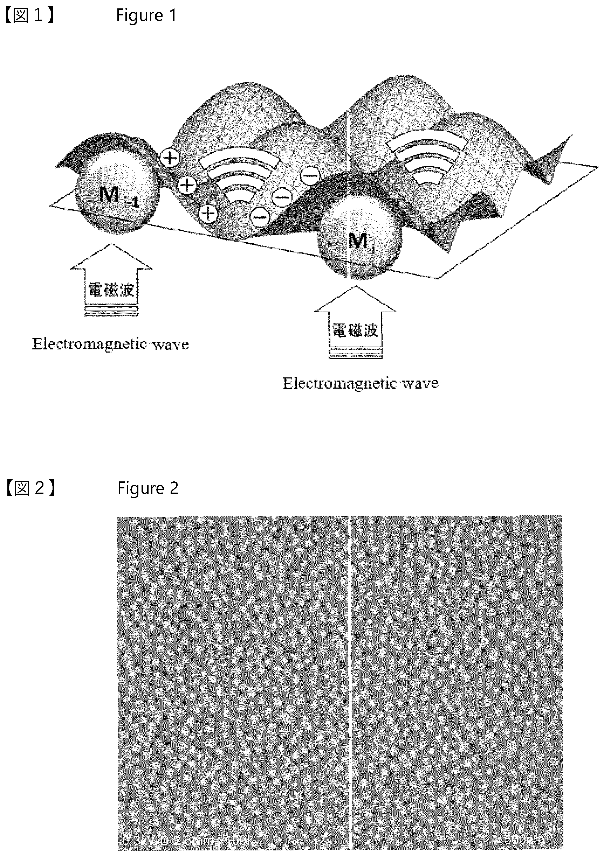

Example 1 (paragraph 0079) of the publication mentions that "silver particles are allowed to grow on a soda glass substrate very slowly using a DC magnetron sputtering apparatus in the following conditions to form a metal particle aggregate thin film on the entire surface of the substrate to obtain a metal particle aggregate layer laminated substrate." As is apparent from FIG 1(b), this metal particle aggregate layer includes a particle in which a plurality of metal particles is aggregated. When such a group of particles is irradiated with an electromagnetic wave from the back surface side, a high-temperature region called a hot spot may be nonuniformly generated also inside of such a group of particles. Therefore, also in this invention, irradiation with an electromagnetic wave is carried out from the front surface side of the matrix resin.

Furthermore, claim 1 of Japanese Unexamined Patent Application, Publication No. 2015-163845 (below-mentioned Patent Document 4) discloses "a surface enhanced Raman spectrum substrate comprising a conductive member; an immobilized layer formed on one surface of the conductive member; and a plurality of nanoparticles arranged on the one surface of the immobilization layer, in which Raman scattering can be intensified by high electromagnetic field from each nanoparticle, wherein each of the nanoparticles has a particle diameter of 1 nm to 100 nm or less, the nanoparticles are arranged in a lattice with equal intervals, and an interval between the adjacent metal nanoparticles is equal to or less than the particle diameter, and localized surface plasmon of each metal nanoparticle can be resonated by external light."

The inserted drawing of FIG. 8 of the publication mentions in the paragraph 0067 of the publication that "gold fine particles having a particle diameter Fm of about 10 nm is previously modified with a dodecane thiol molecule." Furthermore, the paragraph 0073 of this publication describes "a SEM image of a surface enhanced Raman spectrum substrate of gold fine particle array (10 Dod 2D array) having a particle diameter of 10 nm of Example 1-#1." As is apparent from the inserted view of FIG. 8, particle groups is dispersed in a gold fine particle array. Furthermore, this gold fine particle array has a problem that nonuniform local heating field (hot spot) like a gold nanoblock body two-dimensional array structure shown in FIG. 19 is generated with respect to the electromagnetic field incident from the front surface side.
KR 2013 0049767 relates to a metal microparticle composite which can be used for various devices using surface plasmon resonance. Specifically, the KR '767 discloses a metal fine particle composite produced by a method of heating and reducing metal ions contained in a resin to precipitate metal fine particles. In particular, the metal fine particle composite comprises a film-like matrix resin and metal fine particles fixed on the matrix resin. The metal fine particles are obtained by reducing a metal ion or a metal salt contained in the resin of the matrix resin or a precursor thereof. The particle diameter of the metal fine particles of not less than 90% of the total is in the range of 10 nm to 80 nm. In the depth range of 150 nm or less from the surface of the matrix resin, the metal fine particle layer is dispersed in the plane direction in which the fine metal particles are dispersed to form the metal fine particle layer and only one metal fine particle having the particle diameter specified above exists in the depth direction in the metal fine particle layer. The metal fine particle composite particles have a volume fraction of the metal fine particle complex, and the metal fine particle complex has a volume fraction of the fine metal fine particles in the adjacent metal fine particles.

### Citation List

### Patent Document

[Patent Document 1] Japanese Unexamined Patent Application, Publication No. 2004-051997
[Patent Document 2] Japanese Unexamined Patent Application, Publication No. 2013-10884
[Patent Document 3] Japanese Unexamined Patent Application, Publication No. 2013-177665
[Patent Document 4] Japanese Unexamined Patent Application, Publication No. 2015-163845

### Summary of Invention

### Technical Problem

After conducting extensive studies in order to solve the above-mentioned problems, the present inventors have found that a reduced and deposited coating layer in a group of composite particles shows cohesive polarization action and/or electromagnetic polarization action. An object of the present invention is to provide a nanostructure substrate including a group of composite particles having cohesive polarization action and/or electromagnetic polarization action. Another object of the present invention is to provide a nanostructure substrate in which active sites having such a high cohesive force are dramatically increased to enable a medium to react homogenously over the entire nanostructure substrate. Still another object of the present invention is to provide a nanostructure substrate capable of easily ascertaining optimal reaction conditions of a medium.

### Solution to Problem

The present invention has the following configurations.
(1) A nanostructure substrate having a front surface and a back surface, including: a metal structure body including a group of composite particles, and a substrate including a resin base body, wherein a geometric surface area of a non-embedded part of the group of composite particles is larger than a geometric surface area of an embedded part of the group of composite particles embedded in the resin base body, and each of the composite particles includes fine particles of metal and a coating layer having an upper part being reduced and deposited and including metal or a co-deposit, a lower part of the fine particles of metal is embedded in the resin base body, and the embedded fine particles of metal are disposed apart from each other, characterised in that the embedded particles of metal are self-aggregated.

The nanostructure substrate according to the above (1), wherein the coating layer is reduced and deposited from an aqueous solution, and includes metal, an alloy, or a co-deposit.

The nanostructure substrate according to the above (1), wherein the coating layer is linked.

The nanostructure substrate according the above (1), wherein an average diameter of the fine particles of metal or the like is 10 nm to 90 nm.

The nanostructure substrate according to the above (1), wherein the coating layer and the fine particles of metal are the same kind of metal.

The nanostructure substrate according to the above (1), wherein the coating layer is noble metal.

The nanostructure substrate according to the above (1), wherein a group of composite particles shows plasmon characteristics.

The nanostructure substrate according to the above (1), wherein the fine particles of metal are a light receiving surface of an electromagnetic wave or an electric field.

The electromagnetic polarization action of the present invention is described as follows. In other words, to protrusions (roots of mushroom) of the tip end face of a group of metal fine particles arranged in a plane on the back surface side of the nanostructure substrate, electromagnetic waves or electric fields incident from the back surface side are gathered. The electromagnetic waves gathered on the protrusions propagate on the linked group of composite particles, and then homogenized internal energy is uniformly diffused from the coating layer (cap of mushroom) of the group of composite particles to the front surface side of the nanostructure substrate. Furthermore, mild reaction can be promoted by allowing the cohesive polarization action of the coating layer to work toward a place where electromagnetic polarization action of the nanostructure substrate works.

In the metal structure body including the group of composite particles of the present invention, the fine particles of metal or the like are self-aggregated. In other words, individual fine particles of metal or the like are electrically insulated from each other, and adjacent metallic particles are non-conductive to each other. On the other hand, it is preferable that the reduced and deposited coating layers are brought into conduction with each other. This is because a geometric surface area on the front surface side of the group of composite particles in a nanostructure substrate is continuously decreased outward to suppress generation of local overheating. When a gas or liquid medium is brought into contact with the nanostructure substrate of the present invention, the gas or liquid is uniformly heated over the entire deposited particle group, so that the temperature of the gas or liquid medium is mildly increased.

In the nanostructure substrate of the present invention, the fine particles of metal or the like are self-aggregated for arranging a group of fine particles of metal or the like horizontally at intervals. The fine particle groups of metal and the like are arranged at intervals for uniformly guiding the incidence of electromagnetic waves into fine particles of metal or the like. Even when the incident light is natural light, polarized light waves of straight line polarized light or circularly polarized light, special waves such as a laser wave or a pulse wave, a certain region of electromagnetic wave can be gathered into one place of the fine particles of metal or the like.

The shape of the group of fine particles of metal or the like may be various geometric shapes, for example, a sphere, a long sphere, a cube, a truncated tetrahedron, a bipyramid, a regular octahedron, a regular decahedron, and a regular icosahedron. In order to form a stable layer of deposited particles by wet plating every time, it is preferable that the appearance of the immobilized group of fine particles of metal or the like is hemispherical.

It is preferable that an average particle diameter of the group of fine particles of metal or the like is 10 nm to 90 nm. This is because when the average particle diameter is less than 10 nm, the aspect ratio of the group of composite particles is not sufficient. In this case, a site of a resin base body other than the group of fine particles of metal or the like may be a deposition core. When the site of the resin base body is a deposition core, the deposited particle group is not deposited on the group of fine particles of metal or the like so that the quality of the nanostructure substrate is likely to be unstable. The lower limit value of the average particle diameter of the group of fine particles of metal or the like is preferably 10 nm or more, and more preferably 15 nm or more.

When the average particle diameter of the group of fine particles of metal or the like is more than 90 nm, the plasmon strength becomes strong. However, when the average particle diameter becomes larger, the growth site of the deposited particle layer is relatively decreased. In other words, since the number of recesses bringing cohesive action is decreased, the reaction to a medium of a small molecule such as gas may be difficult. The upper limit value of the group of fine particles of metal or the like is preferably 90 nm or less, more preferably 60 nm or less, further preferably 50 nm or less, and particularly preferably 40 nm or less.

When the group of fine particles of metal or the like are arranged horizontally at intervals, the group of fine particles of metal or the like horizontally arranged at intervals can be formed by an inkjet or a 3D printer. Furthermore, such a group of fine particles of metal or the like can be formed in advance by dry plating such as vapor deposition. In addition, the group of fine particles of metal or the like can be arranged by providing a V-groove or a hollow depression in the substrate.

However, it is preferable that the group of fine particles of metal or the like are self-aggregated. When an appropriate dispersing agent is added during the chemical reduction, the group of fine particles of metal or the like is dispersed without cohering in a solution. Such a group of fine particles of metal or the like is apart from each other on the resin base body, and are self-aggregated in a form of a planar lattice. It is particularly preferable that the group of fine particles of metal or the like is reduced from a metal-containing aqueous solution using a reducing agent, and at the same time, this reduced the group of fine particles of metal or the like is self-aggregated. This is preferable because it is the most economical.

The group of fine particles of metal or the like becomes a deposition core of a coating layer to be reduced and deposited. Consequently, the group of fine particles of metal or the like and the coating layer have a relation of 1:1. In order to strengthen this relation, the group of fine particles of metal or the like and the coating layer are preferably the same kind of metal. More preferably, the group of fine particles of metal or the like is reduced and deposited from an aqueous solution.

In the nanostructure substrate of the present invention, the coating layer is deposited on the group of fine particles of metal or the like because an action of the coating layer by a cohesive force is used for mild reaction or warming of the medium, and also because the action by the electromagnetic wave and the like is used alone or in combination. The coating layer of a group of the deposited particles in which metal ions in the solution are reduced to metal has a strong reducing action at the beginning. Methods for depositing metal from an aqueous solution include substitution plating, reduction plating, and electroless plating. Electroless plating that deposits autocatalytically is preferable. Even if the height of the coating layer is uneven, the energy such as electromagnetic wave is uniformly distributed because the group of fine particles of metal or the like is arranged in a plane. In other words, the nanostructure substrate of the present invention can control the polarization action by a cohesive force (cohesive polarization action) by the polarization action (electromagnetic polarization action) due to electromagnetic waves or the like.

In the nanostructure substrate of the present invention, the reason why the coating layers on the group of fine particles of metal or the like becomes uneven can be understood as follows. That is, even if the metal concentration in the aqueous solution is uniform, there is a difference in the supply rate between the amount of metal ions supplied in the horizontal direction of the xy axis and the amount of metal ions supplied in the z-axis direction. Therefore, the deposited particles are likely to grow in the z-axis direction. Therefore, the growth rate of the deposited particles in the horizontal direction of the xy axis surrounded by the deposited particles becomes slower and slower. In other words, the supply rate of metal ions becomes the rate-determining step, and a coating layer having irregular heights can easily be obtained.

In the nanostructure substrate of the present invention, the geometric surface area on the front surface side is larger than the geometric surface area on the back surface side in the group of composite particles such that energy such as incident electromagnetic waves is uniformly distributed and diffused to a large area. When the coating layer is heat-treated at a temperature higher than the precipitation temperature, the contour of the surface morphology of the coating layer becomes clear. **In** other words, the heat treatment relaxes the crystal strain of the deposited particles, the crystal plane of the metal lattice is exposed, and the diffusion sites are stabilized.

It is preferable that in the surface morphology of the coating layer, the individual coating layers are linked. When the individual coating layers are linked, a large number of recesses are generated on the front surface side of the nanostructure substrate. Furthermore, these recesses are linked to make a geometric surface morphology of a sea-island structure. This recess continuously decreases in area as it approaches the surface of the resin base body. Consequently, the cohesive polarization action and/or electromagnetic polarization action becomes continuously strong in the recess. In other words, these media can be autonomously brought into contact with the coating layer at a reaction distance optimal to the length of the medium of a gas molecule, a liquid molecule, or a solid molecule.

The surface morphology of the coating layer is more preferably a sea-island structure. In the sea-island structure, several deposited particles are linked to form an island. The sea part serves as a path for metal ions supplied in the horizontal direction of the xy axis. Since the geometric surface area on the front surface side of the group of composite particles is larger than the geometric surface area on the back surface side, variation due to heat generation from the surface morphology of the individual deposited particles is reduced. Note here that as the wet plating progresses, the surface morphology of the coating layer is changed from the sea-island structure to a flat normal plating film. In other words, when the coating layer becomes a continuous film similar to bulk metal, a large number of polarization actions by the coating layer do not occur.

Furthermore, the metal of the coating layer is preferably a metal of elements of Groups 8 to 11 in Periodic 4 to 6 as a plasmon metal or a heat generating metal. Gold, silver, nickel, palladium or platinum is more preferable. Gold is particularly preferable. The metal can be co-deposition plated. For example, non-metals such as carbon black, aerosols such as silica, alumina, and titania, silicon carbide, and the like, may be co-added to an electroless plating solution.

In the nanostructure substrate of the present invention, the material of the support body is preferably an insulating resin or glass transmitting visible light. Examples of the insulating resin include polyimide resin, polyamic acid resin, fluorene resin, polysiloxane resin, polyethylene terephthalate resin, polyphenylene ether resin, epoxy resin, fluororesin, vinyl resin, phenol resin, and the like, and ion exchange resin, and the like. This resin material may be made of a single resin, or may be a resin material obtained by mixing a plurality of resins.

It is more preferable that the support body is a colorless and transparent insulator. This is because such a transparent body permits irradiation of the metal structure body with an electromagnetic wave as a pulse wave or in a spot shape from the back surface side of the nanostructure substrate. Furthermore, with an insulator, the energy by the electromagnetic polarization action generated in the group of fine particles of metal or the like can be retained inside the metal structure. In particular, in the group of composite particles, the polarization action by the longitudinal plasmon observed in a nanorod can be generated.

### Operation of Invention

The operation of the nanostructure substrate of the present invention will be described in detail with reference to the drawings.

A group of fine particles of metal or the like is fixed to a resin base body, and a coating layer is deposited on the group of fine particles of metal or the like. When the group of fine particles of metal or the like in the x-axis direction is ΣMᵢ and the fine particles of metal or the like in the y-axis direction are ΣMₖ (including the case of i = k), the individual fine particles of metal or the like are separated from each other. FIG. 1 shows two fine particles of metal or the like (Mᵢ and Mᵢ₋₁). FIG. 1 is a conceptual diagram for describing the principle of the present invention.

As shown in FIG. 1, when two fine particles of metal or the like (Mᵢ and Mᵢ₋₁) are fixed to the resin base body by a transparent support body, the two fine particles of metal or the like (Mᵢ and Mᵢ₋₁) are insulated from each other. However, when a reduced and deposited metal or a co-deposited coating layer are formed on the two fine particles of metal or the like (Mᵢ and Mᵢ₋₁), a linked body of the two fine particles of metal or the like (Mᵢ and Mᵢ₋₁) is formed by the coating layer, the two fine particles of metal or the like (Mᵢ and Mᵢ₋₁) are brought into conduction with each other.

In this way, since both of the group of fine particles of metal or the like (ΣMᵢ and ΣMₖ) disposed apart from each other in the x-axis direction and the y-axis direction, respectively, are embedded in the resin base body at the other end, the group of fine particles of metal or the like are arranged two-dimensionally. This arrangement is obtained by self-aggregating the group of fine particles of metal or the like (ΣMᵢ and ΣMₖ) in an aqueous solution using a dispersing agent.

When the self-aggregated group of fine particles of metal or the like (ΣMᵢ and ΣMₖ) are immobilized on a thermosetting resin, it can be performed at the same time with removing the deposition strain of the coating layer. The preferable heat-treatment temperature is 80°C to 400°C. The upper limit of the heat-treatment temperature is preferably 300°C, and particularly preferably 200°C.

When a coating layer of reduced and deposited metal is formed on the fine particles of metal or the like (Mᵢ and Mᵢ₋₁), as shown by + and - in FIG. 1, cohesive polarization by a cohesive force is generated on the coating layer. Strength of polarization on the medium by the cohesive polarization action is dependent on the distance of the composite particles (Mᵢ and Mᵢ₋₁), the strength of polarization changes explosive continuously according to the distance between the deposited particles (M'ᵢ, M'ₖ). In particular, if the coating layer forms a mortar-shaped recess, the optimal location on which the cohesive polarization action acts is uniquely determined according to the type and size of the medium molecule.

Furthermore, an electromagnetic wave from the outside is absorbed from the apex of the two fine particles of metal or the like (Mᵢ and Mᵢ₋₁). The fine particles of metal or the like (Mᵢ and Mᵢ₋₁) are present apart from each other, an electromagnetic wave such as visible light from the outside is uniformly incident. Since the speed at which the incident electromagnetic wave flows through the coating layer is faster than the speed at which the electromagnetic wave is diffused from the coating layer, the entire coating layer is uniformly warmed. Then, as shown by arch-shaped symbols in FIG. 1, energy is released from the front surface side of the group of composite particles from the mortar-shaped recess or the like.

Since intensity of polarization by the electromagnetic polarization action also depends on the distance of the composite particles (Mᵢ and Mᵢ₋₁), as shown in the arch-shaped symbols of FIG. 1, the intensity continuously changes according to the distance of a mortar-shaped recess. As shown in FIG. 1, since the geometric surface area of the composite particles on the front surface side is larger than the geometric surface area of the fine particles of metal or the like on the back surface side, even if the incident electromagnetic waves are pulsed, the emitted electromagnetic waves are gentle. Therefore, also by the electromagnetic polarization action, a mild reaction can be carried out depending on the type of medium molecule of liquid, gas or solid.

Since the cohesive polarization action and the electromagnetic polarization action have different properties from each other, they act separately on the medium molecule.

Furthermore, in the two coating layers shown in FIG. 1, the geometric surface area of the front surface side of the composite particles group is larger than the geometric surface area of the back surface side of the fine particles of metal or the like (Mᵢ and Mᵢ₋₁), local hot spots do not occur as conventionally. Note here that the resonance frequency of the group of composite particles by the wavelength of the external electromagnetic wave differs depending on the type of metal, the surface morphology, the medium, and the like.

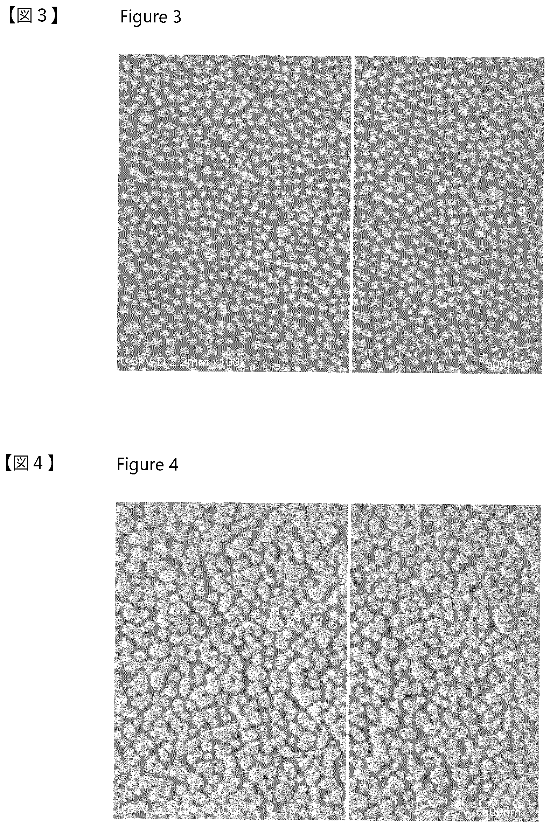

Furthermore, as shown in FIG. 4 described later, when the amount of metal reduced and deposited increases, the surface morphology of the coating layer changes from a sea-island structure to an L-shaped block shape. Then, the coating layer of this L-shaped block starts to be linked to the deposited particles of the adjacent island. The outer portion of this L-shaped block serves as a path for metal ions supplied in the horizontal direction of the xy axis. Note here that there are numerous number of L-shaped blocks linked in this way on a nanostructure substrate of a millimeter order.

Therefore, even if the individual cohesive polarization action and/or electromagnetic polarization action is weak, a mild warming effect or a mild chemical reaction effect can be brought as a whole of the nanostructure substrate. The average particle diameter, distribution density, and area density can be adjusted as appropriate with respect to the group of fine particles of metal or the like (ΣMᵢ and ΣMₖ) and the coating layer depending on various conditions such as the type/concentration of the metal salt to be reduced, the type/concentration of the organic ligand, the type/concentration of the reducing agent, pH and liquid temperature.

For example, the plasmon effect by the group of fine particles of metal or the like and the plasmon effect by the group of composite particles are generally known. However, the actual nanostructure substrate does not show the optimal plasmon effect for visible light of 400 nm to 700 nm or laser light. Thus, it is necessary to determine the heat generation state or the types of plasmon due to the optimal hot spot suitable for the medium by appropriately changing the average particle diameter and area density of the group of fine particles of metal or the like (ΣMᵢ and ΣMₖ) of the coating layer, and the sea-island structure of the coating layer.

The process of forming a coating layer will be described in more detail together with FIGS. 2 to 5.

A scanning electron microscope (SU8020 manufactured by Hitachi High-Technologies Corporation) was used for the observation.

FIG. 2 shows that the group of fine particles of metal or the like (ΣMᵢ and ΣMₖ) reduced and deposited from an aqueous solution are fixed on a resin base body. The group of fine particles of metal or the like (ΣMᵢ and ΣMₖ) are self-aggregated by an appropriate dispersing agent. The group of fine particles of metal or the like (ΣMᵢ and ΣMₖ) are arranged on the resin base body at intervals in the horizontal direction. This group of fine particles of metal or the like shows the embedded state before the coating layer is formed by wet plating. In this case, the geometric surface area on the front surface side of the group of composite particles is equal to the geometric surface area on the back surface side.

Next, as shown in FIG 1, wet-plating is carried out to two fine particles of metal or the like (Mᵢ₋₁ and Mᵢ) continuous in the x-axis direction. When the wet plating is started, crystal grains are deposited around the fine particles of metal or the like (Mᵢ₋₁ and Mᵢ) as cores in the x-axis, y-axis, and z-axis directions. It is preferable that the reduced fine particles of metal or the like and the deposited particles forming the coating layer are the same metal. As shown in FIG 3, immediately after the start of the wet plating, the individual composite particles are separated from each other. Even in this case, the geometric surface area on the front surface side of the group of composite particles is larger than the geometric surface area on the back surface side.

When the wet plating progresses, reduced and deposited crystal grains are stacked to form a coating layer on the group of fine particles of metal or the like (Mᵢ and Mᵢ₋₁) as shown in FIG 1. When observed from above, as shown in FIG 4, the coating layer increases substantially isotropically in the x-axis direction and the y-axis direction so as to form a sea-island structure. Furthermore, as shown in FIG 1, the coating layers of adjacent composite particles are linked to form a mortar-shaped recess surrounded by the coating layers. In this case, the geometric surface area on the front surface side of the group of composite particles becomes clearly larger than the geometric surface area on the back surface side.

When the metal structure body is observed from the front surface side, as shown in FIG 4, it has an infinite form in which individual composite particles are linked. When the grain boundaries of the coating layer are heat-treated, the contour shown in FIG 4 appears more clearly. It seems that the difference in height in the z-axis direction appears as a grain boundary pattern.

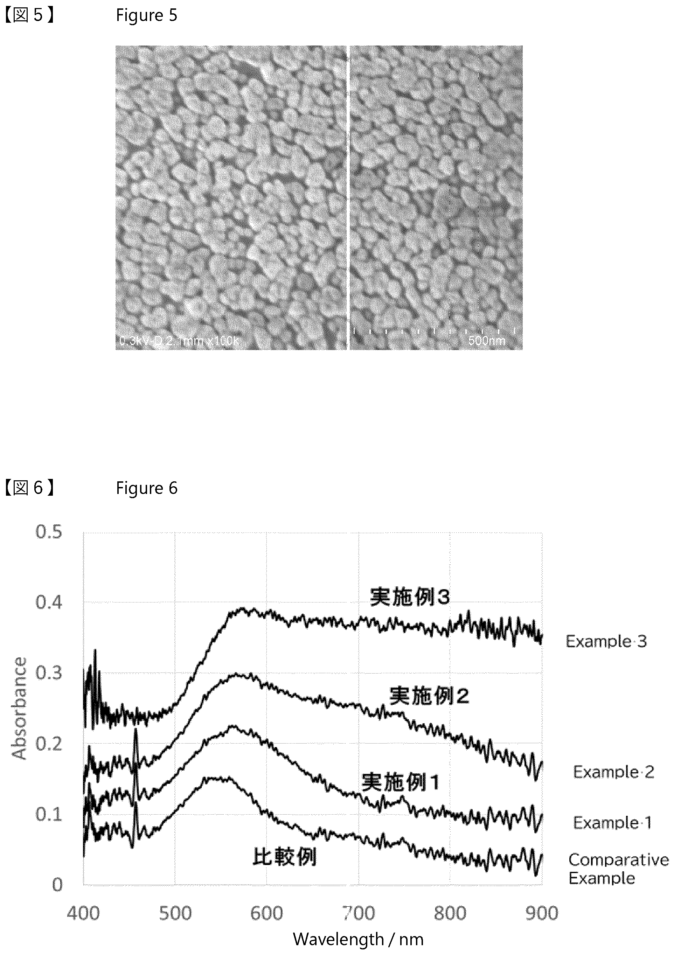

At the end stage of the wet plating, as shown in FIG 5, the coating layers of most of the group of composite particles are linked in the same horizontal plane. Since the group of fine particles of metal or the like are arranged in the horizontal direction, the group of fine particles of metal or the like, which are not linked, do not conduct with each other. In other words, in the state shown in FIG 5, the entire metal structure composed of the group of composite particles starts to come into contact with each other via a large number of coating layers at the same time.

When the wet plating is further advanced from the final stage of FIG 5, the coating layer having irregular heights is self-adjusted. As a result, the front surface side of the group of composite particles becomes a flat ultra-thin plating film. In other words, a well-known ultra-thin plating film is formed. On the other hand, on the back surface side of the group of composite particles, the fine particles of metal or the like remain separated from each other. In this case, the geometric surface area on the front surface side of the group of composite particles is smaller than the geometric surface area on the back surface side.

Herein, the geometric surface area on the back surface side is a value calculated based on the total weight obtained by dissolving a group of fine particles of metal or the like fixed on a resin base body with a solution, and the average particle diameter of the metal fine particle group dispersed in the solution. Furthermore, the geometric surface area of the group of composite particles on the front surface side is a value calculated based on the total weight obtained by dissolving the metal layer from the nanostructure substrate in a solution, and the average particle diameter of the metal fine particle group dispersed in the solution, and the like. It does not mean the real surface area.

As described above, it is preferable in the nanostructure substrate of the present invention that the metal structure body includes a large number of mortar-shaped recesses in the metal structure. This is preferable because, as shown by the right arrow of the plasmon resonance in the gap mode of FIG. 6, which will be described later, the plasmon in the gentle longitudinal mode is expressed by this metal structure body. Longitudinal mode plasmons are usually plasmons observed in elongated nanoparticles such as a nanorod.

The amount of metal occupied by the group of composite particles of the present invention is preferably continuously decreased upward from the resin base body surface. In other words, a large number of mortar-shaped recesses are formed in the metal structure, a mild reaction by cohesive polarization action and/or electromagnetic polarization action is autonomously started at an optimal positions suitable for the molecule of the medium. At this time, this void portion becomes a convection flow path of the medium. It is more preferable that a zigzag straight line can be drawn for the irregular island-shaped structure in the sea-island structure.

The wet-plated metal constituting the coating layer of the present invention is not particularly limited. The types of metal can be appropriately selected depending on the medium of gas or liquid to be reacted. Preferably, the metal of the coating layer is preferably a metal of elements of Groups 8 to 11 in Periodic 4 to 6 from the viewpoint of ease in expression of the plasmon. For example, metal species such as gold, silver, copper, cobalt, nickel, palladium, platinum, rhodium, and iridium, or alloy plating species thereof can be used.

The coating layer of the present invention may be a metal exhibiting a strong plasmon effect or a metal having a large resistance value. For example, one metal or an alloy selected from the group of gold, silver, nickel, palladium, and platinum is more preferable. Gold is particularly preferred. Furthermore, the above-mentioned metal or alloy can be co-deposited and plated with an aerosol of sulfur, phosphorus, carbon black, titanium oxide, or the like, to obtain the coating layer of the present invention.

The wet plating of the coating layer is preferably electroless plating. In particular, it is preferable to carry out the plating operation using an autocatalytic electroless plating solution or a substitution plating solution having an extremely slow precipitation rate. These plating solutions can be used by diluting a commercially available metal plating solution. For example, the autocatalytic electroless metal plating can granulate a coating layer of a group of composite particles at an arbitrary speed. Optimal precipitation conditions can be determined by referring to a graph shown in FIG 6. In this way, mass production of the nanostructure substrate or the like of the present invention becomes possible.

It is preferable to use chemically reduced group of fine particles of metal or the like of the present invention. As the reducing agent, in addition to the sugar alcohol group, a well-known group such as citric acid or polysaccharide as described in the prior art as examples can be used. When the metal-containing solution is chemically reduced with such a reducing agent, the reduced group of fine particles of metal or the like can be autonomously self-aggregated. In other words, the group of fine particles of metal or the like are separated from each other and arranged in a plane lattice at an appropriate distance autonomously depending on the type and concentration of the reducing agent.

For example, Japanese Patent Publication No. 2011-511885 describes an example in which a polysaccharide is used. Further, Japanese Patent Application Laid-Open No. 2004-051997 describes an example in which alkylamine, carboxylic acid amide, or an aminocarboxylic acid salt is used. Any of the above compounds can be used in the group of fine particles of metal or the like of the present invention. For example, chemically reduced gold fine particles have various external shapes such as sphere, ellipsoid, and polyhedron. However, even if the shape is different, the group of gold fine particles shows plasmon absorption in the vicinity of around 530 nm. The same is true for plasmon absorption by other metals. The absorption wavelength of plasmons depends on the metal species of the coating layer.

In the aggregate of the group of fine particles of metal or the like of the present invention, the interval between adjacent nanoparticles is preferably 20 nm or less, and more preferably 10 nm or less. The intensity of plasmons also depends on the particle diameter and surface density of the coating layer, and seems to depend on the total weight of the group of composite particles. As described above, the metal structure of the present invention is characterized by having many mortar-shaped recesses. Even the metal species of the coating layer having weak plasmons can be applied to various devices by the cohesive polarization action and/or electromagnetic polarization action.

### Advantageous Effects of Invention

The nanostructure substrate of the present invention has an advantageous effect of capable of expressing an autonomous reaction of a medium by the cohesive polarization action and/or electromagnetic polarization action everywhere in the coating layer. The mortar-shaped recesses are present everywhere. Furthermore, the medium can be easily exchanged from the opening of the sea-island structure. The nanostructure substrate of the present invention permits continuously supplying the reaction sites with a fresh gas or liquid. For example, even in a nanostructure substrate having a wide range of 1 µm² to 100 cm², the mortar-shaped recesses can be uniformly dispersed. Therefore, the nanostructure substrate of the present invention has an advantageous effect that a gentle catalytic reaction or chemical reaction can be carried out by the cohesive polarization action and/or electromagnetic polarization action.

Furthermore, the nanostructure substrate of the present invention has an advantageous effect that the particle diameter and the arrangement interval of the group of fine particles of metal or the like can be adjusted by a dispersing agent or the like according to the type of the incident electromagnetic wave. Furthermore, there is an advantageous effect that the metal species and surface morphology of the coating layer can be selected according to the use of the nanostructure substrate. By using the optimum nanostructure substrate for the reaction medium, there is an advantageous effect that it is not affected by the variation of the group of fine particles of metal or the like and the coating layer.

In addition, there is an advantageous effect that the sea-island structure of the nanostructure substrate serves as a flow path of the reaction medium. In other words, the inflow path and the outflow path of the medium are on the same plane in the mortar-shaped recess, but the side wall of the mortar-shaped recess is the inflow path or the outflow path outside the sea-island structure or the L-shaped block. For example, even if the mortar-shaped ceiling portion is blocked by a large molecule after the reaction, an outflow path is autonomously formed from the mortar-shaped side wall. The nanostructure substrate of the present invention has an advantageous effect of allowing mild catalytic reaction and adsorption reaction of a mixed gas or the like while the mixed gas or the like is allowed to pass through.

In addition, the nanostructure substrate of the present invention has an advantageous effect that, the chemical reaction and the like of the medium can be promoted more than ever because not only the cohesive polarization action but also the electromagnetic polarization action can be carried out together. Furthermore, when the plasmon effect is used, there is an advantageous effect that not only the polarization action in the transverse mode but also the polarization action in the longitudinal mode can be exhibited. The nanostructure substrate of the present invention has an advantageous effect that a labeled compound or the like can be selectively adsorbed on the top of the group of composite particles.

Furthermore, the nanostructure substrate of the present invention has an advantageous effect that since the coating layer can be produced by wet plating, there is an effect that even a large-area substrate can be easily produced. Furthermore, the nanostructure substrate of the present invention has an advantageous effect that mass production can be carried out in a short time and at low cost.

### Brief Description of the Drawings

FIG 1 is a conceptual diagram for describing the principle of the present invention.
FIG 2 is a view showing a group of fine particles of metal or the like of Comparative Example.
FIG 3 is a view showing an Example of the present invention.
FIG 4 is a view showing an Example of the present invention.
FIG 5 is a view showing an Example of the present invention.
FIG 6 is a view showing an absorbance curve in accordance with the present invention and Comparative Example.

### Description of Embodiments

Hereinafter, Examples and the like of the present invention will be described in more detail appropriately with reference to the drawings.

### <Aggregate of group of gold fine particles>

In FIG 2, a group of gold fine particles having an average particle diameter of 20 nm reduced on a thermosetting transparent resin base body is fixed on the front surface side of a transparent resin support body. As shown in FIG 1, adjacent gold fine particles are separated from each other and arranged two-dimensionally. Therefore, the cross sections of all the group of gold fine particles as shown in FIG 2, which may be the three gold fine particles continuous in the x-axis direction and the three gold fine particles continuous in the y-axis direction seen in FIG 2, are in the same plane.

The resin base body in accordance with this embodiment can be used alone. The resin base body in accordance with this embodiment can be used in combination with another support body. The support body is preferably a transparent body. Furthermore, as the shape of the substrate, for example, a plate shape, a sheet shape, a thin film shape, a mesh shape, a geometric pattern shape, an uneven shape, a fibrous shape, a bellows shape, a multilayer shape, a spherical shape, or the like, can be applied. When the substrate does not have light transmitting property, it can be used as a sensitivity sensor for detecting external changes.

The resin base body can also work as a base layer. As the base layer, glass, ceramics, silicon wafers, semiconductors, paper, metals, alloys, metal oxides, synthetic resins, organic/inorganic composite materials, and the like, can be used. Furthermore, base layers, having surfaces subjected to, for example, silane coupling agent treatment, chemical etching treatment, plasma treatment, alkali treatment, acid treatment, ozone treatment, ultraviolet ray treatment, electrical polishing treatment, polishing treatment with an abrasive, and the like, may be used.

When the group of fine particles of metal or the like in accordance with this embodiment and a coating layer with the upper side reduced and deposited are combined, it is necessary to set the optimal conditions. In order to find the optimal conditions, for example, a step of being immersed in a dilute wet plating solution for a certain period of time can be repeated for several cycles. Furthermore, it is possible to specify a predetermined plating time in which the strongest plasmon is expressed. By repeating the wet plating at this specified time, stable plasmons can be repeatedly generated. Furthermore, by performing wet plating in this way, the nanostructure substrate of the present invention can be mass-produced.

The metal structure according to this embodiment of the present invention is not limited to the above embodiment, and the metal structure of the present invention can be implemented with various modification within the scope of the technical idea of the present invention. Specific examples of this embodiment will be described in detail in the following examples and the like. However, the present invention is not limited to these Examples.

### (Comparative Example)

### <Arrangement of group of gold fine particles >

A group of gold fine particles (average particle diameter: 20 nm) reduced and deposited from an aqueous solution were self-aggregated on a transparent semi-curable polyester resin film (glass transition temperature (measured value): 140°C) and subjected to a predetermined heat treatment. The lower part of the group of gold fine particles was half submerged in the polyester resin film and embedded in the front surface side of the transparent resin base body. This back surface side is the light receiving surface of the electromagnetic wave or electric field. This is a Comparative Example.

As shown in FIG 2, the group of gold fine particles are arranged at intervals on a transparent polyester resin film. In other words, the embedded gold fine particles are present apart from one another. This structure is Comparative Example. The geometric surface area on the front surface side is the same as the geometric surface area on the back surface side in the group of composite particles of the Comparative Example. The gap between adjacent gold fine particles in the horizontal direction in the group of gold fine particles is about 20 nm.

The transparent substrate on which the group of gold fine particles were fixed had a light pink color.

Next, for this Comparative Example, the absorbance was measured in the wavelength in the range of 400 nm to 900 nm, and the absorption spectrum distribution of gold was observed. A fiber multi-channel spectroscope (Flame manufactured by Ocean Optics) was used for measurement of the absorbance. The absorption spectrum curve of the Comparative Example is the bottom curve of FIG 6. In this curve, it is shown that a plasmon peculiar to the group of gold fine particles having an absorbance of 0.15 appears in the vicinity of 550 nm.

### (Example 1)

### <Deposition of gold coating layer>

Next, this transparent substrate was immersed in an electroless gold plating solution at 65°C (an improved bath of Precious Fab ACG3000WX manufactured by Nippon Electroplating Engineers Co., Ltd.) for 10 seconds, and this step was defined as one cycle. This step was repeated for three cycles to obtain a gold coating layer. In other words, gold crystal grains were deposited on the fixed gold fine particles. This is shown in FIG 3.

As can be seen from FIG 3, in the gold coating layer, the diameters of most of the group of gold fine particles increase in a form of a mushroom, and the gold coating layer grows in a hemispherical shape seen from above. As shown in FIG 1, in the group of composite particles, the geometric surface area on the front surface side is larger than the geometric surface area on the back surface side. When the average particle diameter of the gold-coating layer was measured from the image of the scanning electron microscope, the average particle diameter of the gold- coating layer was in the range of 40 nm to 50 nm.

When the gold coating layer of FIG 3 was formed, the color of the transparent resin substrate changed from light pink before electroless gold plating to light purple after electroless gold plating. The absorption spectrum distribution of gold was observed in the same manner as in the comparative example. The second curve from the bottom is the plasmon curve of Example 1.

This curve shows that the group of gold composite particles is shifted from the peak value around 550 nm to the long wavelength side. This shows that the apparent aspect ratio is shifted due to the increase in weight of the gold coating layer. **In** other words, since the heights of the group of gold composite particles vary, the plasmons of the individual gold coating layers show different peak values. However, when viewed from the whole group of gold composite particles, there is an imbalance by the weight of the group of gold fine particles and the weight increase of the gold coating layer. This imbalance appears as a plasmon shift in FIG. 6. The plasmon shift as shown in FIG 6 are similar to the plasmon shift by a nanorod having a high aspect ratio.

Furthermore, the absorbance of plasmon in the transverse mode of the gold coating layer is 0.22. In other words, the absorbance is increased by 0.07 points from 0.15 of the gold fine particle. This increase occurs because an area in the horizontal direction of the gold coating layer (the area of the umbrella part of the mushroom) increases.

### (Example 2)

### <Sea-island structure of L-shaped block>

When the electroless gold plating step was repeated for another three cycles, the color of the nanostructure substrate changed from blue-violet to dark purple. A photograph of the nanostructure substrate after heat treatment observed from the front surface side is shown in FIG 4. In FIG 4, a place corresponding to the start of the sea-island structure of Example 2 is still seen.

Furthermore, in FIG 4, many places where the gold coating layers are linked and grow into an L-shaped block are observed. Traces of a plurality of gold coating layers can still be seen in this L-shaped block. This shows that the heights of the gold coating layers of the L-shaped blocks are different from each other. Furthermore, in the group of composite particles, the geometric surface area on the front surface side is larger than the geometric surface area on the back surface side.

The absorption spectrum distribution of gold was observed in the same manner as in Example 1. This absorption spectrum curve is shown in the second curve from the top of FIG 6. The curve of Example 2 shows that the peak value of plasmon in the transverse mode of the gold coating layer shifts from about 550 nm to about 580 nm of the group of gold fine particles. In other words, this shift indicates that the apparent aspect ratio of the gold coating layer has increased. Furthermore, the peak value of plasmon in the transverse mode of the gold coating layer is significantly increased from 0.15 to 0.3. This increase occurs because an area in the horizontal direction (total volume) of the gold coating layer increases.

Furthermore, a plasmon in the longitudinal mode can be seen in the vicinity of 750 nm in the right direction of this curve. This plasmon is expressed in a position similar to that of the plasmon in the longitudinal mode observed in a gold nanorod. This also shows that the apparent aspect ratio of the gold coating layer becomes large.

### (Example 3)

The electroless gold plating step was repeated for another three cycles to granulate the gold coating layer. As shown in FIG 5, a part of the sea that looks black started to disappear. It can be said that this is the final stage of the sea-island structure. Since the group of composite particles still remains spherical, the geometric surface area on the front surface side is larger than the geometric surface area on the back surface side in the group of composite particles. The color of the nanostructure substrate changed from blue-violet to gold. The uppermost curve in FIG 6 is the plasmon curve of Example 3.

As is apparent from the results of the Examples and the conventional examples mentioned above, it is shown that when the nanostructure substrate composed of the coating layer according to the present invention is used, the absorbance becomes higher than that of the Comparative Example. In other words, it is shown that when an electromagnetic wave is incident on the nanostructure substrate of the present invention from the back surface side, the electromagnetic wave radiated from the front surface side becomes gentle. Furthermore, comparison of the graphs of Examples 1 to 3 shows that the influence of the wavelength of visible light on the absorbance decreases as the amount of precipitation increases. Further comparison of the graphs of Example 1 and Example 2 shows that in Example 2, a new plasmon resonance in the longitudinal mode having a wavelength of 700 to 800 nm was also expressed.

### Industrial Applicability

The nanostructure substrate of the present invention can be used for a surface-enhanced Raman spectrum substrate having sensitivity for single molecule detection. It can also be used for a substrate for detecting environmentally harmful substances and detecting viruses and the like. Furthermore, the nanostructure substrate of the present invention can be used as a substrate for improving the luminous efficiency of light emitting elements utilizing the localized plasmon resonance phenomenon and improving the conversion efficiency of the photoelectric conversion element or the thermophotovoltaic element. In addition, the nanostructure substrate of the present invention utilizes the action of localized plasmon resonance, and is applicable in chemical and biometric industries such as chemical sensors and biosensors.

## Claims

1. A nanostructure substrate having a front surface and a back surface, comprising
a metal structure body including a group of composite particles, and
a substrate including a resin base body,
wherein a geometric surface area of a non-embedded part of the group of composite particles is larger than a geometric surface area of an embedded part of the group of composite particles embedded in the resin base body, and each of the composite particles includes fine particles of metal (Mᵢ, Mᵢ₋₁) and a coating layer having an upper part being reduced and deposited and including metal or a co-deposit, a lower part of the fine particles of metal(Mᵢ, Mᵢ₋₁) is embedded in the resin base body, and the embedded fine particles of metal(Mᵢ, Mᵢ₋₁) are disposed apart from each other, wherein the embedded fine particles of metal(Mᵢ, Mᵢ₋₁) are self-aggregated.

2. The nanostructure substrate according to claim 1, wherein the coating layer is reduced and deposited from an aqueous solution, and comprises metal, an alloy, or a co-deposit.

3. The nanostructure substrate according to claim 1, wherein the coating layer is linked.

4. The nanostructure substrate according to claim 1, wherein an average diameter of the fine particles of metal(Mᵢ, Mᵢ₋₁) is 10 nm to 90 nm.

5. The nanostructure substrate according to claim 1, wherein the coating layer and the fine particles of metal(Mᵢ, Mᵢ₋₁) are the same kind of metal.

6. The nanostructure substrate according to claim 1, wherein the coating layer is a noble metal.

7. The nanostructure substrate according to claim 1, wherein the group of composite particles shows plasmon characteristics.

8. The nanostructure substrate according to claim 1, wherein the fine particles of metal(Mᵢ, Mᵢ₋₁) are a light receiving surface of an electromagnetic wave or an electric field.

## Patentansprüche

1. Nanostruktur-Substrat mit einer Vorderseite und einer Rückseite, umfassend:
einen Metallstrukturkörper, der eine Gruppe von Verbundpartikeln aufweist, sowie
ein Substrat, welches einen Harzgrundkörper aufweist, wobei eine geometrische Oberfläche eines nicht eingebetteten Teils der Gruppe von Verbundpartikeln größer ist als eine geometrische Oberfläche eines in dem Harzgrundkörper eingebetteten Teils der Gruppe von Verbundpartikeln, und wobei jeder der Partikel aus Verbundwerkstoff feine Partikel aus Metall (Mᵢ, Mᵢ₋₁) sowie eine Beschichtungsschicht aufweist, wobei diese einen oberen Teil aufweist, der reduziert und
abgeschieden ist und ein Metall oder eine Co-Abscheidung umfasst, wobei ein unterer Teil der feinen Partikel aus Metall (Mᵢ, Mᵢ₋₁) in den Harzgrundkörper eingebettet ist, und die eingebetteten feinen Partikel aus Metall (Mᵢ, Mᵢ₋₁) voneinander getrennt angeordnet sind, wobei die feinen Partikel aus Metall (Mᵢ, Mᵢ₋₁) selbstaggregiert sind.

2. Nanostruktur-Substrat nach Anspruch 1,
bei welchem die Beschichtungsschicht aus einer wässrigen Lösung reduziert und abgeschieden ist und ein Metall, eine Legierung oder eine Co-Abscheidung umfasst.

3. Nanostruktur-Substrat nach Anspruch 1,
bei welchem die Beschichtungsschicht angebunden ist.

4. Nanostruktur-Substrat nach Anspruch 1,
bei welchem ein durchschnittlicher Durchmesser der feinen Partikel aus Metall (Mᵢ, Mᵢ₋₁) 10 nm bis 90 nm beträgt.

5. Nanostruktur-Substrat nach Anspruch 1,
bei welchem die Beschichtungsschicht und die feinen Partikel aus Metall (Mᵢ, Mᵢ₋₁) aus derselben Art von Metall bestehen.

6. Nanostruktur-Substrat nach Anspruch 1,
bei welchem die Beschichtungsschicht ein Edelmetall ist.

7. Nanostruktur-Substrat nach Anspruch 1,
bei welchem die Gruppe von Verbundpartikeln Plasmonen-Eigenschaften aufweist.

8. Nanostruktur-Substrat nach Anspruch 1,
bei welchem die feinen Partikel aus Metall (Mᵢ, Mᵢ₋₁) eine lichtempfangende Oberfläche für elektromagnetische Wellen oder elektrische Felder sind.

## Revendications

1. Substrat nanostructuré comportant une surface avant et une surface arrière, comprenant
un corps de structure métallique comprenant un groupe de particules composites, et
un substrat comprenant un corps de base en résine,
dans lequel une superficie géométrique d'une partie non incorporée du groupe de particules composites est supérieure à une superficie géométrique d'une partie incorporée du groupe de particules composites incorporées dans le corps de base en résine, et chacune des particules composites comprend des particules fines de métal (Mᵢ, Mᵢ₋₁) et une couche de revêtement comportant une partie supérieure qui a été réduite et déposée et comprenant un métal ou un dépôt simultané, une partie inférieure des particules fines de métal (Mᵢ, Mᵢ₋₁) est incorporée dans le corps de base en résine, et les particules fines de métal incorporées (Mᵢ, Mᵢ₋₁) sont disposées espacées les unes des autres, dans lequel
les particules fines de métal incorporées (Mᵢ, Mᵢ₋₁) sont auto-agrégées.

2. Substrat nanostructuré selon la revendication 1, dans lequel la couche de revêtement a été réduite et déposée à partir d'une solution aqueuse, et comprend un métal, un alliage, ou un dépôt simultané.

3. Substrat nanostructuré selon la revendication 1, dans lequel la couche de revêtement est liée.

4. Substrat nanostructuré selon la revendication 1, dans lequel un diamètre moyen des particules fines de métal (Mᵢ, Mᵢ₋₁) s'inscrit dans la plage de 10 nm à 90 nm.

5. Substrat nanostructuré selon la revendication 1, dans lequel la couche de revêtement et les particules fines de métal (Mᵢ, Mᵢ₋₁) sont du même type de métal.

6. Substrat nanostructuré selon la revendication 1, dans lequel la couche de revêtement est un métal noble.

7. Substrat nanostructuré selon la revendication 1, dans lequel le groupe de particules composites présente des caractéristiques plasmoniques.

8. Substrat nanostructuré selon la revendication 1, dans lequel les particules fines de métal (Mᵢ, Mᵢ₋₁) constituent une surface de réception de lumière d'une onde électromagnétique ou d'un champ électrique.
